# EUROPEAN PATENT APPLICATION

(11) **EP 4 847 469 A1**
(43) Date of publication of application: **02.12.2026**
(21) Application number: 25179543.1
(22) Date of filing: 28.05.2025
(51) Int. Cl.: C04B 24/38, C04B 28/14

(54) **CATIONIC STARCH**

(71) Applicant: Etex Building Performance International SAS, 84915 Avignon (FR); Etex Services NV, 1880 Kapelle-op-den-Bos (BE)
(72) Inventor: ARANCON, Rick Arneil D., 1070 Anderlecht (BE); PETIGNY, Nathalie, 84915 Avignon (FR); PEYRON, Pierre, 84260 Sarrians (FR); BOCQUET, Anne Claire, 84130 Le Pontet (FR)
(74) Representative: Etex Services NV - Etex IPSC

(57) **Abstract**

A gypsum slurry composition comprising more than 20 wt.% of gypsum particles on a dry basis of the total weight of the solid components, said gypsum particles having a d50 measured by laser diffraction below 300 µm, at least 50 wt.% of calcined gypsum particles, a cationic starch present in an amount of 0.10- 10.0 wt. %, preferably 2-5 wt.% of the total amount of the total solid content, functional additives in an amount of 0.1 to 15 wt.% and water in an amount to have a ratio Water/Solid between 0.4 to 1.

## Description

### Field of the invention

The present disclosure relates to a gypsum slurry comprising gypsum or recycled gypsum in combination with a cationic starch, a method to produce plasterboard using this gypsum slurry and the use of cationic starch and recycled gypsum in plasterboard.

### Background

Plasterboard or drywall is a panel made of gypsum, which is typically used in the construction of walls and ceilings.

Plasterboard is typically manufactured via the deposition of a slurry containing calcined gypsum on a facer or liner, followed by applying a second facer on the slurry and forming the slurry into the shape of a panel. The calcined gypsum also called stucco is composed predominantly of β calcium sulfate hemihydrate. The hemihydrate and water of the slurry react to form gypsum (calcium sulphate dihydrate), which is known as "setting". The setting forms an interlocking matrix of calcium sulfate dihydrate which end in a solid article prior to being cut into panels and sent to a kiln for final drying. The excess water is removed via drying in a kiln.

Conventionally, calcium sulfate dihydrate or gypsum is supplied to a board manufacturing plant and converted to calcium sulfate hemihydrate or stucco in a calciner under high temperature. As a result, the manufacture of wallboard is conventionally energy intensive due to calcination needs of stucco. In addition, in order to have a pourable slurry extra water is used which must then be evaporated once the gypsum is set. This is done through a follow up drying process.

Thus, there exists a need to make gypsum board production more sustainable and efficient. Incorporating uncalcined gypsum alongside hemihydrate offers a more sustainable approach. The benefit of directly using uncalcined gypsum as a filler is two-fold: a) reduction of energy consumption related to the calcination of gypsum to stucco, and b) the use of less amount of water as there is less stucco to hydrate to form the boards. However, this method significantly reduces the mechanical strength of plasterboards. In addition, plasterboards are nowadays mostly lightened to be better handled. This also has an impact on the compressive strength of the boards.

Starches are known to be used to improve the mechanical strength of the plasterboard core as well as binder to improve the adhesion between the gypsum core and the facers.

US20220234950A1 describes a calcium sulfate slurry composition that comprises calcium sulfate hydrates, cationic starch, and water, providing high strength at low density. The cationic starch is substituted with amine and/or ammonium groups, enhancing the mechanical properties of gypsum materials, such as compressive strength and nail pull resistance, while reducing board weight. WO2025064299 describes a method using uncalcined gypsum in the core slurry, combined with stucco and a starch binder. Using an uncooked non-substituted starch rather than a pregel starch improves the fluidity of the slurry.

The present invention provides a method using cationic starch which will lower the impact of adding uncalcined stucco to the composition. Surprisingly, the inventors have discovered that boards incorporating cationic starch alongside gypsum exhibit superior mechanical strength compared to those containing either no starch or native starch with gypsum, particularly when the proportion of uncalcined gypsum exceeds 20%. This effect is enhanced when using recycled gypsum which contains paper fiber residues.

### Summary of the invention

It is an object of the present invention a gypsum slurry composition comprising
more than 20 wt.% of uncalcined gypsum particles on a dry basis of the total weight of the solid content, said uncalcined gypsum particles having a d50 measured by laser diffraction below 300 µm, at least 50 wt.% of calcined gypsum particles and a cationic starch present in an amount of 0.10- 10.0 wt. %, preferably 2-5 wt.% of the total amount of the total solid content, , functional additives in an amount of 0.1 to 15 wt.% and a water in an amount to have a ratio Water/Solid between 0.4 to 1. In an embodiment the ratio is between 0.6 -0.8.

It is understood that uncalcined gypsum particles are composed of more than 80 wt.% of calcium sulphate dihydrate, preferably more than 90 % more preferably more than 95 wt.% relative to the total weight of the particles.

Uncalcined gypsum particles may be natural and obtained from gypsum rock or gypsum sand. Uncalcined gypsum particles may also have a synthetic gypsum origin. Typically, synthetic gypsum originates from flue gas desulphurization (FGD), phosphoric acid production, boric acid production, lactic acid production, citric acid production, titanium dioxide production or any process comprising calcium sulfate dihydrate production as a by-product. Gypsum obtained from FGD is also known as desulfogypsum (DSG).

The uncalcined gypsum particles have a particle size distribution which can be expressed by d50. The term "d50" in the sense of the present invention is a measure for the average particle size and is defined as follows: 50 percent (by number) of the particles (e.g. grains) in the corresponding sample have a size which is equal or smaller than the given d50 value. The term "particle size" especially represents the diameter of a sphere whose volume is identical to that of the particle under consideration having an arbitrary shape. The particle sizes referred to herein can be measured using
Laser Diffraction Spectrometry (LDS), more particularly according to IS013320-1: 2009.

Particles of Calcined gypsum also named stucco or plaster refers to a partially dehydrated gypsum particles of the formula CaSO₄·xH₂0, where x can range from 0 to 0.5. The term "calcined gypsum" is also referred to herein as "hydratable calcium sulfate". Calcined gypsum can be obtained via the calcination of gypsum, i.e. the thermal treatment of gypsum to remove (a part of) the combined water. For the preparation of calcined gypsum particles, natural or synthetic gypsum may be used.

As used herein, a "cationic starch" is a starch that has been chemically modified to provide the starch with a net positive charge in aqueous solution by the introduction of amine and/or ammonium groups to the starch. Particular substituents bearing ammonium and/or amino groups are described in further detail below.

The cationic starches described herein can be provided in a variety of forms. In certain embodiments as otherwise described herein, the cationic starch is incorporated into the calcium sulfate slurry in the form of granular starch (i.e., in the form of substantially intact starch granules). That is, the starch has not been cooked or gelatinized before being added to the slurry, and is in the slurry in a substantially uncooked/ungelatinized form.

In a preferred embodiment, the cationic starch is present in liquid form as a pregel starch. The advantage of being in liquid form is that it mixes more easily into the slurry.

Cationic starches suitable for use in the method of the disclosure can have a variety of amounts of nitrogen-based substituents incorporated therein. The wt % of nitrogen in the material is a convenient way to quantify the level of cationic substituents. As used herein, the % N (i.e., weight percent of nitrogen) is quantified using the Kjeldahl method. Based on the disclosure herein, the amount of the cationic starch can be selected to provide significant increases in strength of gypsum materials. For example, in certain embodiments as otherwise described herein, the cationic starch has a % N value in the range of 0.10 wt % to 2 wt %. In certain such embodiments, the cationic starch has a % N value in the range of 0.2-1.0 wt %. In an embodiment, the cationic starch has a % N value in the range of 0.3-0.5 wt %.

In a preferred embodiment, the cationic starch is present in a liquid or pregel form having a %N value in the range of 0.3-0.5 wt %.

Functional additives are foaming agent, fluidizer, water repeller agent such siloxane, retarder, accelerator...

In one embodiment, the slurry comprises 0.1 to 5 wt% of fluidizer.

In a preferred embodiment, the composition comprises a 7-10 wt.% foaming agent wt.% related to total solid content. The board typically has a density of 0.8. Nowadays, there is a trend to manufacture lighter boards with similar mechanical properties. The handling is indeed easier, and it is better for ecological reasons, as there is less weight to transport and less material to use.

The amount of uncalcined gypsum particles is above 20 wt.%. In an embodiment the amount sets in a range between 25 to 50 wt.%, or in a range between 25 to 40 wt.%. In a preferred embodiment, the amount of gypsum particles is between 25 to 35 wt. % relative to the total amount of the solids in the slurry.

In a preferred embodiment the gypsum particles are originated from recycled gypsum.

The recycled gypsum has the particularity that it contains paper fiber residues. The paper fiber residues are measured by washing the gypsum with water and subsequent filtration at 40µm. The residues are then calcined at 450°C to obtain the % of paper fiber residues.

The source of recycled gypsum can include a source of plasterboards and other plaster products, which are shredded in a shredder and preferably sieved through a sieve to form the source of recycled gypsum particles of median particle diameter, d50. The d50 of the recycled gypsum particles is below 300 µm, preferably below 200 µm. The d50 of the recycled gypsum particles is at least 15 µm, or at least 20 µm or at least 30 µm or at least 40 µm.

It is preferred that the recycled gypsum particles contain less than 2 wt.% paper fiber residues, preferably less than 1.5 wt.% paper fiber residues. The content is typically between 0.5 and 0.8 wt %. The recycled gypsum particles contain more than 80 wt% of dihydrate calcium disulfate particles. The wt% is relative to the total gypsum particles.

It is a further object of the present invention to provide a method for producing plasterboard, said method comprising the following steps:
- providing a gypsum slurry as described here above,
- depositing the slurry onto a bottom facer laid on a conveyor in motion,
- applying a top facer (22) onto a free surface of the gypsum slurry to form a sandwich structure with a core (1c) made of the gypsum slurry sandwiched between the top and bottom facers (21 , 22),
- allowing the core to set.

Another object of the present invention is the use of cationic starch in combination with recycled gypsum in gypsum slurry for the production of plasterboard.

### Examples

### PREPARATION OF 4x4x16 CM BLOCKS

Amounts of calcined gypsum particles and uncalcined recycled or not gypsum particles are weighed separately. The right quantity of water is then measured, based on the desired ratio of water/solid of 0.8. Following the preparation of both solid and liquid components, calcined gypsum and gypsum are rapidly mixed together prior to the addition of water added with the dispersant. The resulting slurry is then poured to a 4x4x16 cm polystyrene mold and left to dry for 2h15min. After such time, the blocks are demolded and left to dry further at 40°C for at least 48h, or until the mass is constant prior to mechanical testing.

The setting time of the blocks was fixed to eliminate the impact of the setting and fluidity to the mechanical performance. The setting was adjusted by the addition of a setting retardant (Retardan P). Furthermore, adjustment of the setting time also allowed to fix the slump to a consistent spread at 150-250 mm. Density was also targeted to 1.1-1.3 g.m⁻³. The water to stucco varied between 0.4-0.8. The Water to solid content remains at 0.8. The setting time was 11 +/- 2 min.

A number of samples without starch, with native starch (MBX8065-Roquette) or with a liquid cationic starch (Vector-Roquette Vector IC27216) were produced. The used cationic starch has a dry solid content of 27 wt.% and a Nitrogen content of 0.35-0.40 %.

The calcined gypsum was DSG calcined gypsum having a purity of >96%. The gypsum was DSG gypsum having a d50 =40 µm +/- 5%. The recycled gypsum was gypsum particles having a d50=35 µm and a purity of 78% and 1 wt% of paper fiber residues.

In the following name of the samples, N stands for Native starch, C for cationic starch, G for Gypsum, R for recycled gypsum.

| | Calcined gypsum parts | Uncalcined gypsum parts | Uncalcined Recycled gypsum parts | Cationic starch part | Native starch parts | Water/calcined gypsum | Water/ solid |
|---|---|---|---|---|---|---|---|
| Sample 100 (ref) | 100 | - | - | - | - | 0.8 | 0.8 |
| Sample 90 (ref) | 90 | - | 10 | - | - | 0.9 | 0.8 |
| Sample 80 (ref) | 80 | - | 20 | - | - | 0.62 | 0.8 |
| Sample 80NG | 80 | 20 | - | - | 3 | 0.62 | 0.8 |
| Sample 80NR | 80 | - | 20 | - | 3 | 0.62 | 0.8 |
| Sample 80CG | 80 | 20 | - | 3 | - | 0.55 | 0.8 |
| Sample 80CR | 80 | - | 20 | 3 | - | 0.55 | 0.8 |
| Sample 70 (ref) | 70 | - | 30 | - | - | 0.55 | 0.8 |
| Sample 70NG | 70 | 30 | - | - | 3 | 0.55 | 0.8 |
| Sample 70NR | 70 | - | 30 | - | 3 | 0.55 | 0.8 |
| Sample 70CG | 70 | 30 | - | 3 | - | 0.55 | 0.8 |
| Sample 70CR | 70 | - | 30 | 3 | - | 0.55 | 0.8 |
| Sample 50(ref) | 50 | - | 50 | - | - | 0.4 | 0.8 |
| Sample 50NG | 50 | 50 | - | - | 3 | 0.4 | 0.8 |
| Sample 50NR | 50 | - | 50 | - | 3 | 0.4 | 0.8 |
| Sample 50CR | 50 | 50 | - | 3 | - | 0.4 | 0.8 |
| Sample 50CG | 50 | - | 50 | 3 | - | 0.4 | 0.8 |

### COMPRESSION TESTING

The blocks/mini boards were permanently stored in the oven at 40°C until constant weight and kept there until the compression testing. Compression testing was done by placing the sample between two parallels plates, the top and bottom surfaces of 40 mm x 40 mm of the sample and a applying a force, at a speed of 2400 N·s⁻¹ until failure. Results of the compression tests are normalized with the measured density of the 4x4x16 cm blocks, expressed as MPa/g/cm³.

| | Compression/density (MPa/g/cm3) | | | | | |
|---|---|---|---|---|---|---|
| Calcined gypsum particles parts | Gypsum Particle Parts | Without any starch Ref | Native starch + Gypsum NG | Native starch+ Recyc NR | Cationic starch+ Gypsum CG | Cationic starch+ Recyc. CR |
| 100 | 0 | 12.8 | - | - | - | - |
| 90 | 10 | - | - | 11.0 | - | 9.5 |
| 80 | 20 | 6.6 | 10.5 | 9.2 | 10.4 | 8.5 |
| 70 | 30 | 6.5 | 8.6 | 8.3 | 9 | 9.7 |
| 50 | 50 | 6.3 | 6.9 | 6.3 | 7.5 | 8.1 |

The addition of uncalcined gypsum decreases as expected the compression of the sample. By adding native or cationic starches, the compression is improved. The compression strength is not 100% recovered but the amount of starch used is low (only 3 %).

By replacing the gypsum particles by recycled gypsum particles, the native starch as well as cationic starch provides improves strength in a mixture of 80/20 (calcined gypsum/recycled gypsum). Using recycled gypsum particles impacts the strength as well. In the mixture 70/30 and 50/50 (calcined gypsum/recycled gypsum) strength of the samples with cationic starches are better than strength of samples with native starch. This behavior is enhanced when recycling gypsum particles are used.

### EXAMPLE WITH FOAM

Foam (Millifoam H) was then added to 70-30 compositions to lower the density of the 4x4x16cm prisms from 1.3 g·cm⁻³ to 0.7-0.8 g·cm⁻³. This range of densities translates to boards 9-10 kg·m⁻² for 12.5 mm boards. In these preparations, the ability of the cationic starch to recover lost mechanical performance is again observed.

| | | | Compression/density (MPa/g/cm3) | | |
|---|---|---|---|---|---|
| Foaming Wt.% | Calcined gypsum particles Parts | Gypsum Particle Parts | Without any starch | Native starch + recycled Gypsum | Cationic starch+ Gypsum |
| 7% | 100 | - | 6.2 | - | - |
| 8% | 70 | 30 | 4.4 | 4.9 | 5.3 |

## Claims

1. A gypsum slurry composition comprising
more than 20 wt.% of gypsum particles on a dry basis of the total weight of the solid components, said gypsum particles having a d50 measured by laser diffraction below 300 µm,
at least 50 wt.% of calcined gypsum particles,
**a cationic starch** present in an amount of 0.10- 10.0 wt. %, preferably 2-5 wt.% of the total amount of the total solid content,
functional additives in an amount of 0.1 to 15 wt.% and
water in an amount to have a ratio Water/Solid between 0.4 to 1.

2. A gypsum slurry composition according to claim 1 wherein the gypsum particles is between 25 to 35 wt. %.

3. A gypsum slurry composition according to any of the previous claims wherein the composition further comprises a foaming agent in an amount of 0. 1 to 10 wt%.

4. A gypsum slurry composition according to any of the previous claims wherein the cationic starch is a starch substituted with amine and/or ammonium groups and has a% N value in the range of 0.3-0.5 wt% of the starch.

5. A gypsum slurry composition according to any of the previous claims wherein the cationic starch is in a liquid form.

6. A gypsum slurry composition according to any of the previous claims wherein the gypsum particles are recycled.

7. A gypsum slurry composition according to any of the previous claims wherein the recycled gypsum particles comprise 0.5 to 2 % of paper fiber residues.

8. A gypsum slurry composition according to any of the previous claims wherein the particles of calcined gypsum are particles of DSG calcined gypsum.

9. A gypsum slurry composition according to any of the previous claims wherein the composition further comprises a fluidizer in an amount of 0. 1 to 5 wt%.

10. A method for producing a plasterboard, said method comprising the following steps:
providing a slurry according to claims 1 to 9
depositing the slurry onto a bottom facer laid on a conveyor in motion,
applying a top facer onto a free surface of the gypsum slurry to form a sandwich structure with a core made of the gypsum slurry sandwiched between the top and bottom facers
allowing the core to set.

11. Use of cationic starch in combination with recycled gypsum particles in the gypsum slurry for the production of plasterboard according to claim 10.
